# EUROPEAN PATENT APPLICATION

(11) **EP 4 610 297 A1**
(43) Date of publication of application: **03.09.2025**
(21) Application number: 23882538.4
(22) Date of filing: 20.10.2023
(51) Int. Cl.: C08J 5/18, B01J 20/22

(54) **RESIN ADDITIVE AND RESIN COMPOSITION CONTAINING SAME**

(30) Priority: 24.10.2022 JP 2022169797
(71) Applicant: Behomal Co., Ltd., Omihachiman-shi, Shiga 523-0083 (JP)
(72) Inventor: NISHIHARA Mayuko, Omihachiman-shi, Shiga 523-0083 (JP)
(74) Representative: Kraus & Lederer PartGmbB
(86) International application number: PCT/JP2023/037952
(87) International publication number: WO 2024/090333

(57) **Abstract**

The present invention aims chiefly to provide a product that absorbs CO₂ without using materials that could have adverse effects on ecology or the environment, or causing environmental problems during manufacturing or disposal, and in particular, to provide a consumer material that is mass-produced and mass-consumed on a daily basis.

The present invention includes, for example, an additive for resin, comprising a porous CO₂ absorbent, characterized in that the absorbent contains a carbon atom-containing material that can be obtained from a biological origin, and a resin composition containing said additive for resin.

## Description

### Technical Field

### (Cross-reference to related applications)

The present application claims the benefit of Japanese Application No. 2022-169797, filed October 24, 2022 with the Japan Patent Office. The Japanese application is hereby incorporated by reference for all purposes as if the entirety of its application documents (specification, claims, drawings, and abstract) were expressly set forth herein.

The present invention belongs to the technical field of additives for absorbing carbon dioxide (CO₂). The present invention mainly relates to an additive for resin capable of efficiently absorbing carbon dioxide and the like in the atmosphere, or to a resin composition to which such an additive is added.

### Background of the Invention

Since the so-called Industrial Revolution period in the 18th century, the human race has continued to achieve economic growth by consuming large quantities of fossil fuels. However, this has led to an unprecedented increase in the concentration of greenhouse gases (e.g., carbon dioxide) in the atmosphere. Climate change in recent decades, which is believed to be caused by the increase in greenhouse gas concentrations, has not only impacted the natural environment and ecosystems, but also affected human society in the form of natural disasters and health hazards, while causing various challenges, and efforts to reduce greenhouse gas emissions have spread throughout the world.

Stabilizing greenhouse gas concentrations and preventing global warming have become common challenges for humanity. Then, the global trend toward decarbonization has accelerated since COP21 (the 21st Conference of the Parties to the United Nations Framework Convention on Climate Change) was held in Paris, France in 2015. The 2030 Agenda for Sustainable Development, adopted by the United Nations in the same year, also sets targets closely related to climate change as Sustainable Development Goals (SDGs).

Under such circumstances, one of the proposed global goals is to reduce greenhouse gas emissions to virtually zero (known as "CO₂ net zero"). To achieve this, there is a greater need than ever to reduce anthropogenic emissions of greenhouse gases, including CO₂. For example, measures to address the energy-related portion of greenhouse gas emissions include reducing electricity usage through energy conservation and converting to renewable energy such as solar and wind power. In addition, afforestation and conversion to biomass fuels are being considered as emissions other than the energy-derived greenhouse gases.

However, it is considered difficult to achieve CO₂ net zero by these reductions and conversions alone. With that, in addition to the above measures, further CO₂ capture, reuse and storage (CCUS: Carbon dioxide Capture, Utilization and Storage) is becoming necessary. For example, Patent Document 1 discloses, as a gas separation and recovery material and a gas separation method for CO₂ and other gases from exhaust gas, a zeolite membrane complex comprising a zeolite membrane having an STT-type crystal structure and a porous substrate, and a gas separation method using the zeolite membrane complex. Also, Patent Document 2 discloses a carbon dioxide absorbent containing an amine compound and a catalyst, and a method of recovering carbon dioxide using the absorbent.

### Prior Art

### Patent Document

Patent Document 1: WO 2017/115454
Patent Document 2: JP 2017-170383 A

### Summary of the Invention

### Problem to be Solved by the Invention

Although the zeolite membrane complex described in Patent Document 1 and the carbon dioxide absorbent described in Patent Document 2 can separate and recover emitted CO₂, the manufacture of the separation and recovery materials requires the use of materials that can have a negative impact on the ecology and environment. Hence, there is a risk of the occurrence of other environmental problems such as emitting a lot of CO₂ throughout the process from manufacture to disposal after use. Furthermore, the introduction of the gas separation method described in Patent Document 1 and the carbon dioxide capture method described in Patent Document 2 requires large equipment and facilities, which increases the introduction costs and makes it difficult to spread them widely.

The present invention chiefly aims to provide a product absorbing CO₂ without using materials that may have adverse effects on ecology and the environment or emitting large amounts of CO₂ during manufacturing or disposal, etc., and in particular, to provide a consumption material that can be mass-produced and mass-consumed on a daily basis.

### Means for Solving the Problems

As a result of diligent study, the present inventor found that the above problem could be solved by adding a porous CO₂ absorbent containing a carbon atom-containing material that can be obtained from a biological origin to a resin, and completed the invention.

The present invention includes, for example, the following.
[1] An additive for resin, comprising a porous CO₂ absorbent, wherein the absorbent contains a carbon atom-containing material that can be obtained from a biological origin.
[2] The additive for resin according to the above-mentioned [1], wherein the porous CO₂ absorbent is a metal organic framework in which a cyclic saccharide derived from a biological origin is used as a ligand and a metal ion is used as a linker.
[3] The additive for resin according to the above-mentioned [2], wherein the cyclic saccharide is α-cyclodextrin, β-cyclodextrin, or γ-cyclodextrin.
[4] The additive for resin according to the above-mentioned [2], wherein the metal ion is a lithium ion, sodium ion, potassium ion, rubidium ion, cesium ion, beryllium ion, magnesium ion, calcium ion, strontium ion, barium ion, iron ion, cobalt ion, nickel ion, palladium ion, platinum ion, copper ion, silver ion, gold ion, zinc ion, or aluminum ion.
[5] The additive for resin according to the above-mentioned [2], wherein the molar ratio of the ligand to the linker in the metal organic framework is in the range of 1:2 to 1:12 (ligand : linker).
[6] An additive for resin, comprising a porous CO₂ absorbent, wherein the absorbent is a metal organic framework in which a cyclic saccharide is used as a ligand and a metal ion is used as a linker.
[7] A resin composition, comprising the additive for resin according to any one of the above-mentioned [1] to [6].
[8] The resin composition according to the above-mentioned [7], wherein the additive for resin according to any one of the above-mentioned [1] to [6] is contained as a porous CO₂ absorbent in the range of 0.1 to 50 parts by weight relative to 100 parts by weight of the base resin.
[9] The resin composition according to the above-mentioned [8], wherein the base resin is a polyolefin resin or a biodegradable resin.
[10] The resin composition according to the above-mentioned [9], wherein the polyolefin resin is polyethylene or polypropylene, or the biodegradable resin is polylactic acid.
[11] A CO₂ adsorbent, comprising the resin composition according to the above-mentioned [7].
[12] A secondary product, comprising the resin composition according to the above-mentioned [7].
[13] The secondary product according to the above-mentioned [12], which is in the form of a resin molded product, a paper molded product, or ink.

### Effects of the Invention

According to the present invention, by adding an additive made from an environmentally compatible material that can be obtained from living organisms to a base resin, a resin molded product can be manufactured without impairing the resin processability or physical properties of the base resin even when processed and molded, while still having a CO₂ adsorption function. Since the additive has a smaller specific gravity than the base resin, a further function of the resin molded product-provided by the present invention is to reduce the product weight. This reduces the amount of CO₂ emissions during transportation and the amount of resin used, capable of contributing to reducing CO₂ emissions during the product's life cycle. In addition, since the resin molded products provided by the present invention have the function to adsorb and retain ambient CO₂, even if the CO₂ reduction effect of a single molded product is small, a large overall CO₂ reduction effect can be achieved through widespread use of the product as a consumer material in large quantities.

### Brief Description of the Drawings

Figure 1 shows results of gas permeation amount measurement. The vertical and horizontal axes represent CO₂ permeability (cc/m²·24hr atm) and elapsed time (minutes), respectively.
Figure 2 shows chronological changes in the relative permeation amount for the film with CO₂ absorbent, when the permeation amount for the film without CO₂ absorbent is taken as 100%. The vertical and horizontal axes represent relative CO₂ permeation amount (%) and elapsed time (minutes), respectively.

### Mode for Carrying Out the Present Invention

### 1 Additive for resin according to the present invention

The additive for resin according to the present invention (hereinafter referred to as "the additive of the present invention") comprises a porous CO₂ absorbent, characterized by containing a carbon atom-containing material that can be obtained from a biological origin.

Here, the term "biological origin" means that the origin is mainly living organisms such as animals and plants or their discharges such as excretions and secretions. The term "carbon atom-containing material" means a material that contains carbon atoms in chemical structure, and as long as it contains carbon atoms, it can be a pure substance or a compound, or an inorganic or organic compound (organic). The term "carbon atom-containing material of biological origin" means a carbon atom-containing material isolated from living organisms, etc. Such a carbon atom-containing material broadly includes not only purely isolated carbon atom-containing materials but also, for example, derivatives chemically modified from the isolated carbon atom-containing materials or carbon atom-containing materials obtained by chemical synthesis or biosynthesis using the isolated carbon atom-containing materials as a starting material. Substances that "can be obtained from a biological origin" include not only substances obtained actually from a biological origin, but also substances other than those obtained from a biological origin (e.g., wholly synthesized substances), as long as they can be obtained from a biological origin.

### 1.1 Porous CO₂ absorbent

The additive of the present invention comprises a porous CO₂ absorbent. The porous CO₂ absorbent contains a carbon atom-containing material that can be obtained from a biological origin, preferably a carbon atom-containing material of biological origin. Specifically, the CO₂ absorbent can include, for example, metal organic frameworks in which a cyclic saccharide, preferably a cyclic saccharide of biological origin, is used as a ligand and a metal ion is used as a linker, polysaccharides of biological origin, microalgae, woody biomass, and activated carbon.

The metal organic frameworks (MOFs), also called porous coordination polymers (PCPs), are porous materials synthesized artificially by using a coordination bond between a metal ion and an organic ligand. The metal ion cross-links with the organic ligand as a linker to construct a framework, and the voids in this framework can function as a space to take in molecules (e.g., CO₂). The additive of the present invention preferably contains, as the above-mentioned porous CO₂ absorbent, a metal organic framework in which a cyclic saccharide, preferably a cyclic saccharide of biological origin, is used as a ligand.

When the additive of the present invention contains a metal organic framework having a cyclic saccharide as a ligand and a metal ion as a linker, there is no particular restriction on the content ratio of the ligand and linker in the metal organic framework, as long as it is possible to construct a framework with a void where CO₂ molecules can be stored. For example, a molar ratio in the range of 1:2 to 1:12 (ligand : linker) is appropriate, and a molar ratio in the range of 1:6 to 1:10 (ligand : linker) is especially preferred.

It is more preferred for the additive of the present invention to contain, as the above-mentioned porous CO₂ absorbent, a metal organic framework with a cyclodextrin of biological origin as a ligand (hereinafter also referred to as "CD-MOF"). The cyclodextrin (CD) is an oligosaccharide in which glucoses are bonded in a ring form, and may be chemically modified. The cyclodextrin is an organic compound that can be obtained from a biological origin. It is preferable to use a cyclodextrin obtained through reacting an enzyme or cyclodextrin synthase on starch isolated from potatoes, corn, etc., thereby through the transfer reaction of the enzyme

The cyclodextrins that can be used in the present invention typically include α-cyclodextrin (α-CD: cyclic oligosaccharide consisting of 6 glucoses), β-cyclodextrin (β-CD: cyclic oligosaccharide consisting of 7 glucoses), and γ-cyclodextrin (γ-CD: cyclic oligosaccharide consisting of 8 glucoses), and also include cyclic saccharides consisting of glucoses of different numbers and chemically modified ones. Among them, γ-cyclodextrin is preferred.

There is no particular restriction on the average particle size of the porous CO₂ absorbent, preferably CD-MOFs, in the additive of the present invention, but it is appropriate that the particle size is, for example, in the range of 0.01 µm to 200 µm. It is more preferred that the particle size is in the range of 0.1 µm to 100 µm, and furthermore preferably in the range of 0.1 µm to 50 µm. Such an average particle diameter is, for example, the median diameter (D₅₀) measured using a wet laser diffraction scattering method.

There is no particular restriction on the average pore diameter of the porous CO₂ absorbent, preferably CD-MOFs, in the additive of the present invention, but it is preferred that the pore diameter is, for example, in the range of 0.3 nm to 1.0 nm, and more preferably in the range of 0.4 nm to 0.6 nm. Such an average pore diameter is, for example, the pore diameter measured by the SF method using the nitrogen gas adsorption method with a specific surface area/pore size distribution measuring apparatus.

There is no particular restriction on the specific surface area of the porous CO₂ absorbent, preferably CD-MOFs, in the additive of the present invention, but it is preferred that the specific surface area is, for example, in the range of 700 m²/g to 1,500 m²/g, and more preferably in the range of 900 m²/g to 1,300 m²/g. Such a specific surface area is, for example, the specific surface area measured by the BET multipoint method using the nitrogen gas adsorption method with a specific surface area/pore size distribution measuring apparatus.

There is no particular restriction on the content of the porous CO₂ absorbent, preferably CD-MOFs, in the additive of the present invention. However, for example, if the content of the porous CO₂ absorbent, preferably CD-MOFs, is 60 mass% or more relative to the additive of the present invention, it is easy to adjust the specific gravity of the additive of the present invention to be smaller than 0.9, and thus the weight of a resin product can be reduced by adding the additive of the present invention to the resin. There is no particular restriction on the upper limit of the content of the porous CO₂ absorbent, preferably CD-MOFs, in the additive of the present invention, but for example, the upper limit is 100 mass% relative to the additive of the present invention.

The metal ions that can constitute CD-MOFs include lithium ion, sodium ion, potassium ion, rubidium ion, cesium ion, beryllium ion, magnesium ion, calcium ion, strontium ion, barium ion, iron ion (e.g. Fe³⁺, Fe²⁺), cobalt ion (e.g. Co³⁺, Co²⁺), nickel ion (e.g. Ni²⁺, Ni⁺), palladium ion (e.g. Pd²⁺, Pd⁺), platinum ion (e.g. Pt²⁺, Pt⁺), copper ion (e.g. Cu²⁺, Cu⁺), silver ion, gold ion, zinc ion, and aluminum ion. Among them, the alkali metal ions of lithium ion, sodium ion, potassium ion, and rubidium ion; the alkaline earth metal ions of calcium ion; iron ion; and magnesium ion are preferred. Particularly, potassium ion is most preferred. As for the CD-MOFs, a combination of γ-cyclodextrin (ligand) and alkali metal ions is preferred. Particularly, in the combination of γ-cyclodextrin (ligand) and K⁺ (metal ion), CO₂ can be suitably absorbed without affecting the ecology or environment. The above metal ions may be used singly or in combination of any two or more thereof.

The organic ligands constituting CD-MOFs are basically cyclodextrins, but may contain other organic ligands. The other organic ligands can include aromatic, aliphatic, alicyclic, heteroaromatic, and heterocyclic compounds having one functional group that can coordinate with metal ions. They may be used singly or in combination of any two or more thereof. From the viewpoint of environmental impact, organic compounds of biological origin are preferred as the other organic ligands.

Functional groups or atomic groups that can coordinate with metal ions include glycidyl groups, COOH, anhydrous carboxylic acid groups, CS₂H, OH, SH, SO, SO₂, SO₃H, NO₂, -S-, -SS -, Si(OH)₃, Ge(OH)₃, Sn(OH)₃, Si(SH)₄, Ge(SH)₄, Sn(SH)₄, PO₃H, AsO₃H, AsO₄H, P(SH)₃, As(SH)₃, CH(SH)₂, C(SH )₃, CH(NH₂)₂, C(NH₂)₃, CH(OH)₂, C(OH)₃, CH(CN)₂, C(CN)₃, CH(RSH)₂, C(RSH)₃, CH(RNH₂)₂, C(RNH₂)₃, CH(ROH)₂, C(ROH)₃, CH(RCN)₂, C(RCN)₃, NH₂, NHR, NR₂, heteroatom constituting an aromatic ring, wherein R indicates a C1 to C5 alkyl or aryl group. The heteroatoms constituting the aromatic ring specifically include intra-ring nitrogen atoms such as pyridine, pyrimidine, pyridazine, pyrazine, triazine, imidazole, thiazole, oxazole, phenanthroline, quinoline, isoquinoline, naphthyridine, purine, bipyridine, and terpyridine; intra-ring oxygen atoms such as furan, dioxetane, and oxetane; and intra-ring sulfur atoms such as thiophene, thiazole, and benzothiophene.

CD-MOFs are composed of metal ions and organic ligands, but may also contain counter ions. When metal ions are used as counterions, the metal ions include ions of magnesium, calcium, manganese, iron, ruthenium, cobalt, rhodium, nickel, palladium, copper, zinc, titanium, vanadium, chromium, manganese, platinum, ruthenium, molybdenum, zirconium, and scandium. A single metal ion may be used as the metal ions, or any two or more metal ions may be used in combination.

CD-MOFs can also have counter anions for neutralizing metal ions. The counter anions include chloride ion, bromide ion, iodide ion, sulfate ion, nitrate ion, phosphate ion, trifluoroacetate ion, methanesulfonate ion, toluene sulfonate ion, benzenesulfonate ion, and perchlorate ion. A single anion may be used as the counter anions, or any two or more anions may be used in combination.

### 1.2 Other ingredients

The additive of the present invention can further contain auxiliaries such as plasticizers, stabilizers, colorants, lubricants, antistatic agents, foaming agents, flame retardants, and cross-linking agents, for example. There is no particular restriction on the auxiliaries that can be used, as long as they do not impair the effects of the present invention. However, from the viewpoint of environmental load, it is preferable to use auxiliaries of biological origin.

The plasticizers can include, for example, phthalate-based plasticizers, phosphate-based plasticizers, fatty acid-based plasticizers, adipic acid-based plasticizers, epoxy-based plasticizers, and polyester-based plasticizers.

The stabilizers can include, for example, metallic-soap-based stabilizers (metal salts of higher fatty acids), non-metallic stabilizers (epoxy compounds, phosphites, etc.), antioxidants (radical scavengers, hydroperoxide decomposition agents, etc.), light stabilizers (UV absorbers, quenchers, etc.).

The colorants can include, for example, inorganic pigments, organic pigments, and dyes.

The lubricants can include, for example, ester-based lubricants, alcohol-based lubricants, fatty acid-based lubricants, stearate-based lubricants, fatty acid amide-based lubricants, and hydrocarbon-based lubricants.

The antistatic agents can include, for example, inorganic-based substances (metal powder, carbon, etc.), silicone-based compounds, and surfactants.

The foaming agents can include, for example, azo-based foaming agents, sulfohydrazide-based foaming agents, and nitroso-based foaming agents.

The flame retardants can include, for examples, inorganic-based flame retardants (aluminum hydroxide, magnesium hydroxide, zirconium-based flame retardants, etc.), halogen-based flame retardants, and phosphorus-based flame retardants.

The cross-linking agents can include, for example, kinds of peroxide.

**In** addition to the porous CO₂ absorbent and the above auxiliaries contained as optional ingredients, the additive of the present invention can further contain a resin ingredient. The additive of the present invention containing the resin ingredient can be, for example, a masterbatch. The masterbatch is preferably one in which the porous CO₂ absorbent is fixed in a dispersed state in the resin ingredient.

When the additive of the present invention contains a resin ingredient, the content is preferably less than 50 mass% relative to the additive of the present invention, and a range of 0.5 mass% to 20 mass% is more preferable.

As the resin ingredient, for example, ingredients that can be used as a base resin for the composition of the present invention described below can be used in the same manner. The resin ingredients may be used singly or in combination of any two or more thereof.

It is also preferable to make the resin ingredient to be composed of the same ingredient as the base resin of the composition of the present invention. For example, if the base resin is polyolefin, the resin ingredient can be polyolefin as well.

### 1.3 Method of manufacturing the additive of the present invention

The additive of the present invention can be produced by mixing the above ingredients according to a conventional method. The porous CO₂ absorbent, which is an essential ingredient in the additive of the present invention, can also be produced according to known techniques. For example, when the porous CO₂ absorbent is a CD-MOF, CD-MOF crystals can be produced by vapor diffusion or liquid diffusion methods (WO2011/116222, Angev. Chem. Int. Ed. 2010, 49, 8630-8634 (hereinafter referred to as "Reference 1"), J. Am. Chem. Soc. 2011, 133,15312-15315 (hereinafter referred to as "Reference 2"). Thus, the additive of the present invention can be produced with very low CO₂ emissions.

### 2 Resin composition according to the present invention

The resin composition according to the present invention (hereinafter referred to as "the composition of the present invention") is characterized by containing the additive of the present invention. In the composition of the present invention, the additive of the present invention or the porous CO₂ absorbent contained therein is preferably in a dispersed state without aggregation.

It is preferable that the composition of the present invention contains at least the additive of the present invention and the base resin, and it is more preferable that the additive of the present invention or the porous CO₂ absorbent contained therein is mixed and integrated with the base resin, and it is further more preferable that the porous CO₂ absorbent is in a dispersed state without aggregation in the base resin.

There is no particular restriction on the content of the porous CO₂ absorbent in the additive of the present invention contained in the composition of the present invention or, in one example, the molded product of the present invention described below, but the content of the porous CO₂ absorbent or the preferred CD-MOFs is appropriately, for example, more than 0.1 part by weight relative to 100 parts by weight of the base resin. Especially, it is preferable to be in the range of 5 parts by weight to 50 parts by weight, and more preferable to be in the range of 5 parts by weight to 40 parts by weight. Note that when the additive of the present invention contains a resin ingredient as a component, the resin ingredient is regarded as being contained in the base resin in the composition of the present invention.

### 2.1 Base Resin

The composition of the present invention can contain, for example, thermoplastic and/or thermosetting resins as a base resin. There is no particular restriction on the base resin that can be used, but the base resin can include, for example, polyolefin (polyethylene, polypropylene, etc.), styrene-based resins, polyvinyl chloride, polyvinylidene chloride, polyvinyl alcohol, polyacrylonitrile, polyacrylic-based plastics (polymethacrylate, polyacrylate, etc. These may be either thermoplastic or thermosetting resins.), diene-based plastics (polybutadiene, polyisoprene, etc.), polyamide, polyester (polyethylene terephthalate, etc.), polycarbonate, polyacetal, fluoro-based resins (polytetrafluoroethylene, etc.), polyurethane-based plastics, thermoplastic elastomers (polystyrene-based elastomer, polyolefin-based elastomer, polyurethane-based elastomers, polyester-based elastomers, polyamide-based elastomers, etc.), epoxy resins, phenoxy resins, phenolic resins, urea resins, melamine resins, diarylphthalate resins, silicon resins and polyimide resins, polyisoprene rubber, polybutadiene rubber, styrene-butadiene copolymer rubber, butyl rubber, acrylonitrile-butadiene rubber, chloroprene rubber, and silicone rubber. Among them, polyolefin is preferred due to its high CO₂ permeability and low water vapor permeability, and polyethylene and polypropylene are more preferred. Epoxy resins are also preferred because of their high heat resistance and ease of curing at relatively low temperatures among thermosetting resins.

The base resin of the composition of the present invention may be, for example, a biodegradable polymer material (biodegradable plastic). From the viewpoint of environmental load, said materials are preferable and can include, for example, natural substance-based biodegradable polymers such as starch, cellulose, chitosan, collagen, cellulose acetate, etc.; microbially-produced biodegradable polymers such as polyhydroxyalkanoic acid, bacterial cellulose, microbial polysaccharides, etc.; chemically synthesized biodegradable polymers such as poly(ε-caprolactone), polylactic acid (poly(L-lactic acid)), polybutylene succinate, polyamino acids, polyglycolic acid, etc.; complex biodegradable polymers such as starch/poly(ε-caprolactone), starch/poly(vinyl alcohol). Among them, poly(L-lactic acid) is more preferred.

### 2.2 Other ingredients

The composition of the present invention can contain auxiliaries such as plasticizers, stabilizers, colorants, lubricants, antistatic agents, foaming agents, flame retardants, and cross-linking agents in addition to the additive of the present invention and the base resin. There is no particular restriction on the auxiliaries that can be used, as long as it does not impair the effect of the present invention. Specific examples or suitable examples of each auxiliary are the same as above.

Besides, the composition of the present invention may contain diluents, fluidizers, and binders, etc. The diluents may include, for example, activated carbon, zeolite, silica gel, and diatomaceous earth. The fluidizers can include, for example, talc, light anhydrous silica, calcium silicate, and magnesium meta-silicate aluminate, and the binders can include, for example, crystalline cellulose, solubilized starch, synthetic mica, and cellulose acetate.

### 2.3 Method of manufacturing the composition of the present invention

The composition of the present invention can be produced in the same manner as ordinary resin compositions, according to a conventional method. For example, when the base resin is thermoplastic, it can be produced by simultaneously mixing a resin pellet (base resin) and the additive of the present invention using a resin mixer.

There is no particular restriction on the temperature during the mixing, as long as the temperature is suitable for the thermal properties of the base resin, but it is, for example, appropriately in the range of 150°C to 210°C. For example, when the base resin is polyethylene, the temperature is preferably in the range of 120°C to 180°C, and when the base resin is polypropylene, the temperature is preferably in the range of 150°C to 200°C. There is no particular restriction on the mixing time, but it is appropriately the time of about 30 minutes.

When mixing, other ingredients mentioned above may be added. The other ingredient can include, for example, plasticizers, stabilizers, colorants, lubricants, antistatic agents, foaming agents, flame retardants, cross-linking agents, diluents, fluidizers, and binders.

The amount of CO₂ emissions during the production of the additive of the present invention is very small, as already mentioned. Thus, since the using amount of base resin material, etc. can be reduced by the corresponding amount of the additive of the present invention used during the production of the composition of the present invention, it is possible to reduce the total amount of CO₂ emissions during the production of the resin composition.

### 3 Processed products, etc. (Secondary products)

The composition of the present invention can be used as a CO₂ adsorbent. It can also be processed, for example, into molded products such as resin molded products or paper molded products. It can also be made into inks for writing, printing, copying, or stamping, for example. Secondary products such as molded products and inks produced from the composition of the present invention are also included in the present invention (hereinafter also referred to as "the secondary product of the present invention," or "the molded product of the present invention," etc.).

The above resin molded product means, for example, plates, columns, and extruded products made of polyolefin (polyethylene, polypropylene, etc.), styrene-based resins, polyvinyl chloride, polyvinylidene chloride, polyvinyl alcohol, polyacrylonitrile, polyacrylic-based plastics (polymethacrylate, polyacrylate, etc.), diene-based plastics (polybutadiene, polyisoprene, etc.), polyamide, polyester (polyethylene terephthalate, etc.), polycarbonate, polyacetal, fluoro-based polymers (polytetrafluoroethylene, etc.), polyurethane-based plastics, thermoplastic elastomers (polystyrene-based elastomers, polyolefin-based elastomers, polyurethane-based elastomers, polyester elastomers, polyamide-based elastomers, etc.), epoxy resins, phenoxy resins, phenolic resins, urea resins, melamine resins, diallyl phthalate resins, silicon resins and polyimide resins, polyisoprene rubber, polybutadiene rubber, styrene-butadiene copolymer rubber, butyl rubber, acrylonitrile-butadiene rubber, chloroprene rubber, silicone rubber, biodegradable polymer materials (natural substance-based, microbially-produced -based, chemically synthesized-based, or complex-based), and blends of these resins or the like.

Specifically, the resin molded product can include, for example, films, sheets, containers, construction materials (e.g., those made of carbon fiber-reinforced epoxy resin), electrical insulation components and substrates, semiconductor-related parts, gas meter parts, tablewares, and automotive parts, which are made from these resins.

Forming into the above-mentioned molded products can be performed, for example, by various types of inflation equipment, presses, calenders, extrusion molding machines, spinning machines, blow molding machines, injection molding machines, vacuum molding machines, compression molding machines, etc.

The above paper molded product can include, for example, containers (e.g., paper containers, paper cans, etc.), packaging materials (e.g., wrapping paper, paper bags, etc.), packing materials (e.g., cardboard, containers, etc.), deodorant materials (e.g., deodorant paper, deodorant filters, etc.), antibacterial materials (e.g., antibacterial paper, antibacterial filters, etc.).

The molded product obtainable from the composition of the present invention can be produced by processing the composition of the present invention in accordance with a conventional method, depending on a desired molded product.

The composition of the present invention may be an ink as described above. For example, the ink, which is the composition of the present invention, can be obtained by using a resin contained in the ink (e.g., a resin for a binder, etc.) as a base resin to which the additive of the present invention is added.

### Examples

Hereinafter, the present invention will be specifically illustrated by way of Examples, but the present invention is not limited to the scope of the Examples.

The raw materials and equipment used in the following examples are as follows:
< Raw Materials >
   γ-CD: γ-cyclodextrin (made from starch derived plants such as potatoes and corn)
   Potassium hydroxide aqueous solution: 0.5 mol/L
   Acetone: Poor solvent in vapor diffusion method
   PE: Low density polyethylene (LDPE), specific gravity: 0.91
   PP: Polypropylene, specific gravity: 0.90
< Equipment >
   Electronic Balance: TE6101-L, manufactured by Sartorius
   Laboplastomill: 1OS100, manufactured by Toyo Seiki Seisaku-sho, Ltd.
   Tabletop hot press machine: small press model G-12, manufactured by Techno Supply Corp.
   Gas Permeation Analysis System: GTR-10XACT, manufactured by GTR Tech, Inc.

### [Example A1] Preparation of the additive of the present invention

The additive of the present invention was prepared according to the method described in Reference 1 and Reference 2.

γ-CD was dissolved in potassium hydroxide aqueous solution at γ-CD : KOH = 1:8 (molar ratio), and then crystallized by vapor diffusion method using acetone. Crystallization was carried out at room temperature and humidity for 5 days. The solid content was then filtered, washed with acetone, filtered again, and dried at 80°C for 60 minutes to produce a powder of CD-MOF (porous CO₂ absorbent) with γ-CD as a ligand and potassium ion as a linker (additive of the present invention).

The specific surface area and pore size of the prepared CD-MOF, γ-CD, and potassium hydroxide (liquid) were analyzed under the conditions shown below, respectively. The results of the analysis are shown below.

### < Analysis Conditions >

Equipment: BELSORP MAX2, manufactured by MicrotracBel Corp.)
Adsorption gas: Nitrogen gas
Pretreatment: 100°C for 5 hours
Adsorption temperature: 77.36 K
Analytical method of specific surface area (theory): BET multipoint method
Pore size analysis method (theory): SF analysis method

### < Analysis Results >

**Table 1**

| | Specific surface area (m²/g) | Pore size in average (nm) |
|---|---|---|
| CD-MOF | 1114 | 0.56 |
| γ-CD | 14 | 1.61 |

As shown in the above analysis results, CD-MOF was obtained as a porous CO₂ adsorbent.

### [Example A2] Preparation of the composition of the present invention

By weighing a base resin (PE:Polyethylene or PP: Polypropylene) and the additive of the present invention (Example 1) each using an electronic balance and mixing, as adjusted to 95 vol% : 5 vol% = 96 wt% : 4 wt%, raw material mixtures containing them were prepared in 100 cm³ aliquots.

The raw material mixtures were mixed at a set temperature using a resin mixing equipment "Laboplastomill". The set temperature was 150°C for PE and 190°C for PP. First, the raw material mixtures were fed into the Laboplastmill at a rotational speed of 2.5 rpm, then mixed at 5.0 rpm for 2 minutes, and then mixed at 20 rpm for 5 minutes. In this way, resin compositions, which are the composition of the present invention, were prepared.

### [Comparative Example A1] Preparation of resin composition without the additive of the present invention

A resin composition without the additive of the present invention was prepared in the same way as in Example A2, except for using only resin pellets of PE or PP (100%).

### [Example A3] Preparation of the molded product of the present invention (film)

Each resin composition of Example A2 that had been mixed was made into a film using a tabletop hot press machine. Performing the film formation at a set temperature using a 300 µm thick spacer resulted in a film with 350 µm.

The set temperature was 150°C for PE and 190°C for PP. First, after preheating for 10 minutes, each resin composition was degassed or defoamed by pressing at 3 MPa. Then, pressing was performed at 20 MPa for 30 seconds, and after removal, cooling was performed for 30 seconds. In this way, the molded product of the present invention (film, 350 µm film thickness) was made.

### [Comparative Example A2] Preparation of resin molded product (film) without the additive of the present invention

A resin molded product without the additive of the present invention was prepared in the same way as in Example A3, except for using each resin composition of Comparative Example A1 that had been mixed.

### [Test Example A1] Gas Permeation Test

The gas permeation test was performed in accordance with JIS K7126-1.

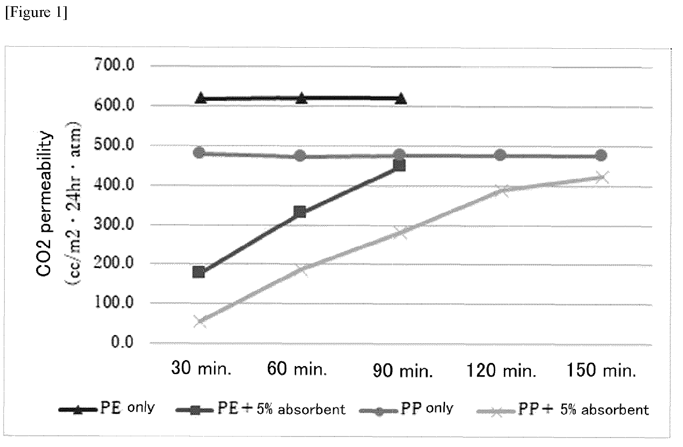

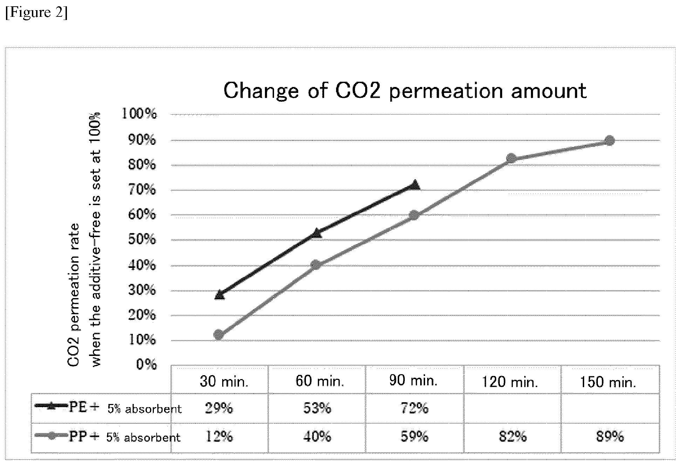

The amount of permeation was measured every 30 minutes at 100% CO₂ gas and 0% humidity using the gas permeation analysis system. The results are shown in Figures 1 and 2.

From Figure 1, it can be seen that due to the presence of the porous CO₂ absorbent (the additive of the present invention), the amount of CO₂ permeation is lower in the early period of the molded product of the present invention compared to the single product (comparative example), especially when closer to the initial time period. In other words, it is clear that the mother material molecules (resin molecules) do not interfere with the pores of the porous CO₂ absorbent, i.e., the voids in the framework of the CD-MOF, and that the CO₂ absorption effect is working even in the form of a resin molded product. The feel, etc. of the molded product of the present invention was also equivalent to that of the resin-alone product.

Furthermore, repeated measurements over time show an increase in the amount of permeation. This is because the amount of CO₂ absorbed by the porous CO₂ absorbent (the additive of the present invention) reaches saturation and is no longer able to absorb any more, resulting in an increase in the amount of permeation without being absorbed. This result shows that permeation is not inhibited by the presence of the porous CO₂ absorbent (the additive of the present invention), but rather that absorption is responsible for the decrease in the amount of permeation.

According to the measurement results in Figure 2, the results of adding the CO₂ absorbent (additive of the present invention) to PE and PP both increases with a similar curve. Then, the amount of permeation saturates at 90% relative to the resin alone. Thus, there is no difference in the amount of CO₂ absorption depending on the type of resin, but the absorption amount may be affected by the CO₂ permeability properties of the resin itself. The saturation of absorption amount rapidly proceeds in high CO₂ permeability resins, whereas the saturation in low CO₂ permeability resins proceeds slowly. In any case, it is clear that any CO₂ permeable resins can be used regardless of the type of resins.

The reason why the permeation amount is constant around 90% is thought to be because 5 vol% of the CO₂ absorbent is added by volume, and the absorbent that has reached saturation of CO₂ absorption amount CO₂ absorption amount becomes an obstacle to gas permeation.

### [Example B1] Preparation of the additive of the present invention

A CD-MOF (porous CO₂ absorbent) powder (the additive of the present invention) was prepared in the same way as in Example A1.

### [Example B2] Preparation of the composition of the present invention

By weighing each of the principal agent of epoxy resin, a hardener of epoxy resin, and the additive of the present invention (Example B1) using an electronic balance and mixing them, so as to adjust the ratio in the finaly cured product of the base resin (epoxy resin) : the additive of the present invention (Example B1) to 95 vol% : 5 vol% = 98 wt% : 2 wt%, raw material mixtures containing them were prepared in 100 cm³ aliquots. Note that the mixing ratio of the principal agent of epoxy resin and the hardener of epoxy resin was 1.00 : 0.88 (mass ratio).

The resulting raw material mixture was processed for 5 minutes in a spinning and revolving mixer to prepare the composition of the present invention, a resin composition.

### [Comparative Example B1] Preparation of resin composition without the additive of the present invention

Resin compositions without the additive of the present invention were prepared in the same way as in Example A2, except for using only the principal agent of epoxy resin and the hardener of epoxy resin.

### [Example B3] Preparation of the molded product of the present invention (film)

Each resin composition of Example B2 that had been mixed was hardened and made into a film using a tabletop hot press machine. Performing the film formation at 180°C for 10 minutes using a 300 µm thick spacer resulted in a film with 500 µm.

### [Comparative Example B2] Preparation of resin molded product (film) without the additive of the present invention

A resin molded product (film that is a cured product) without the additive of the present invention was prepared in the same way as in Example B3, except for using resin composition of Comparative Example B1.

### [Test Example B1] Gas Permeation Test

The gas permeation test was performed in accordance with JIS K7126-1.

The amount of permeation was measured at each time point of 0 minute, 120 minutes, and 150 minutes from the start of the test under 100% CO₂ gas and 0% humidity using the gas permeation analysis system. In Test Example B1, the pressure difference on the surface through which CO₂ gas permeates is 226 cmHg (the pressure difference in Test Example A1 is 76 cmHg).

The results of CO₂ permeability (cc/m²·24hr·atm) measurements at each time point are shown in Table 2 below.

**Table 2**

| | CO₂ permeability (cc/m²·24hr ·atm) | | |
|---|---|---|---|
| | 0 min. | 120 min. | 240 min. |
| Film of Example B3 | 0.9 | 1.1 | 2.4 |
| Film of Comparative Example B2 | 5.4 | 5.3 | 5.4 |

As described above, even when a thermosetting resin (epoxy resin) was used as a base resin, the same tendency as in Test Example A1, where a thermoplastic resin (polyolefin) was used as a base resin, was confirmed.

In other words, the CO₂ permeation rate of the molded product of the present invention is lower than that of the resin-alone product (Comparative Example) due to the presence of the porous CO₂ absorbent (the additive of the present invention) especially when closer to the initial time period, and it is confirmed that the mother material molecules (resin molecules) do not interfere with the pores of the porous CO₂ absorbent, i.e., the voids in the framework of the CD-MOF, and the CO₂ absorption effect is working even in the form of a resin molded product.

The feel and other characteristics of the molded product of the present invention were also equivalent to those of the epoxy resin alone.

In addition, the amount of permeation increases as a function of time. This is thought to be because increase of the porous CO₂ absorbent (the additive of the present invention) in which the amount of CO₂ absorbed has reached saturation disables absorption of CO₂ more than that and the amount of CO₂ transmitted through without absorption has increased. This result is considered to indicate that the permeation is inhibited not by the presence of the porous CO₂ absorbent (the additive of the present invention), but by the decreased amount of permeation due to absorption.

As described above, the additive of the present invention exerts the CO₂ absorption effect even when the additive of the present invention is added to a resin as a base material. Although it is considered that the restraint or interference to the additive of the present invention in the base material is smaller when the additive is added into paper than when into resin, it is thought that the additive of the present invention exerts the CO₂ absorption effect even when the additive of the present invention is added into paper.

### Industrial applicability

According to the additive of the present invention, the production, processing, and use of resin molded products or paper molded products can be carried out in the same way as before without significantly changing the basic properties like usability, etc. present in resins and papers as base materials, and besides, the resin molded products or paper molded products having a CO₂ adsorption function as a further function can be provided. In addition, the composition of the present invention and the molded product of the present invention have a function of adsorbing and retaining ambient CO₂, leading to a reduction in the amount of CO₂ in the atmosphere, thereby contributing to the prevention of global warming. Therefore, the present invention is useful in environment-related industries, etc.

## Claims

1. An additive for resin, comprising a porous CO₂ absorbent, wherein the absorbent contains a carbon atom-containing material that can be obtained from a biological origin.

2. The additive for resin according to claim 1, wherein the porous CO₂ absorbent is a metal organic framework in which a cyclic saccharide derived from a biological origin is used as a ligand and a metal ion is used as a linker.

3. The additive for resin according to claim 2, wherein the cyclic saccharide is α-cyclodextrin, β-cyclodextrin, or γ-cyclodextrin.

4. The additive for resin according to claim 2, wherein the metal ion is a lithium ion, sodium ion, potassium ion, rubidium ion, cesium ion, beryllium ion, magnesium ion, calcium ion, strontium ion, barium ion, iron ion, cobalt ion, nickel ion, palladium ion, platinum ion, copper ion, silver ion, gold ion, zinc ion, or aluminum ion.

5. The additive for resin according to claim 2, wherein the molar ratio of the ligand to the linker in the metal organic framework is in the range of 1:2 to 1:12 (ligand : linker).

6. An additive for resin, comprising a porous CO₂ absorbent, wherein the absorbent is a metal organic framework in which a cyclic saccharide is used as a ligand and a metal ion is used as a linker.

7. A resin composition, comprising the additive for resin according to any one of claims 1 to 6.

8. The resin composition according to claim 7, wherein the additive for resin according to any one of claims 1 to 6 is contained as a porous CO₂ absorbent in the range of 0.1 to 50 parts by weight relative to 100 parts by weight of the base resin.

9. The resin composition according to claim 8, wherein the base resin is a polyolefin resin or a biodegradable resin.

10. The resin composition according to claim 9, wherein the polyolefin resin is polyethylene or polypropylene, or the biodegradable resin is polylactic acid.

11. A CO₂ adsorbent, comprising the resin composition according to claim 7.

12. A secondary product, comprising the resin composition according to claim 7.

13. The secondary product according to claim 12, which is in the form of a resin molded product, a paper molded product, or ink.
